# EUROPÄISCHE PATENTSCHRIFT

(11) **EP 2 268 181 B1**
(45) Veröffentlichungstag und Bekanntmachung des Hinweises auf die Patenterteilung: **03.12.2014**
(21) Anmeldenummer: 09725431.2
(22) Anmeldetag: 24.03.2009
(51) Int. Cl.: A47L 9/00, A47L 9/19, A47L 9/22, F16K 15/02

(54) **STAUBSAUGER MIT UNTERDRUCKVENTIL**
VACUUM CLEANER WITH VACUUM VALVE
ASPIRATEUR AVEC VALVE À DÉPRESSION

(30) Priorität: 28.03.2008 DE 102008016152
(43) Veröffentlichungstag der Anmeldung: 05.01.2011
(73) Patentinhaber: BSH Bosch und Siemens Hausgeräte GmbH, 81739 München (DE)
(72) Erfinder: WEIGAND, Artur, 97618 Niederlauer (DE); FLEGLER, Alexander, 97616 Bad Neustadt (DE); SCHWARZ, Heribert, 97616 Bad Neustadt (DE)
(86) Internationale Anmeldenummer: PCT/EP2009/053463
(87) Internationale Veröffentlichungsnummer: WO 2009/118318

(56) Entgegenhaltungen:
- EP-A2- 1 731 075
- DE-A1-102004 040 985
- DE-A1-102005 017 568
- JP-A- 4 005 935
- US-A- 4 504 081
- US-A- 5 058 623

## Beschreibung

Die Erfindung betrifft einen Staubsauger mit einem Unterdruckventil gemäß dem Oberbegriff des Patentanspruch 1.

Ein auf dem Markt befindlicher Staubsauger weist ein unterdruckgesteuertes Ventil auf, das bei Überschreitung eines zulässigen maximalen Unterdrucks einen Nebenluftkanal öffnet, sodass beispielsweise bei Verstopfungen der staubbelasteten Luftführung, z.B. im Bereich des Staubfilters oder beim Festsaugen der Düse, weiterhin Luft durch das Motor-/Gebläseaggregat angesaugt werden kann. Da der Gebläsemotor durch den Saugluftstrom gekühlt wird, ist darauf zu achten, dass das Motor-/Gebläseaggregat stets durch einen Mindestluftstrom durchströmt wird. Ist die Luftansaugung beispielsweise aufgrund von Verstopfungen im Bereich der Düse, des Saugroheres, des Saugschlauches oder des Staubfilterbeutels unterbrochen, so kann es ohne eine solche Nebenluftansaugung zu unerwünschten Überhitzungen des Motor-/Gebläseaggregats kommen.

Bei einem auf dem Markt befindlichen Staubsauger ist ein tassenförmiger Ventilkörper mittels einer Federwendel in seiner Schließposition vorgespannt in einem Ventilgehäuse eingesetzt. Das Ventilgehäuse ist aus Kunststoff ausgebildet und mittels Rasthacken an einer elektrischen Leiterplatte des Staubsaugers verrastet. Bei der Montage ist darauf zu achten, dass eine am Ventilgehäuse vorgesehene Einstromöffnung und eine Ausstromöffnung weitgehend luftdicht an einem im Gehäuse des Staubsaugers vorgesehenen Nebenluftkanal angekoppelt werden. Aufgrund der baulichen Trennung des Nebenluftkanals und des Ventilgehäuses ist die Montage schwierig und es besteht die Gefahr, dass das Ventilgehäuse nicht ausreichend luftdicht an den Nebenluftkanal angekoppelt ist. Durch Fehlluftströmungen kann es zu einer fehlerhaften Funktion des Unterdruckventils kommen.

Aus der DE 10 2004 040 985 A1 ist ein Staubsauger mit einem Gehäuse und einem Motor-/Gebläseaggregat bekannt, das saugseitig an einen Staubraum einer Staubsammelvorrichtung und druckseitig an eine Ausblasöffnung angeschlossen ist, sowie mit einem Ventilkörper, der aus einer vorgespannten Schließposition bei Erreichen eines vorgegebenen Unterdrucks in eine Offenposition umschaltend in einem Ventilgehäuse gelagert ist, das in einem Nebenluftkanal angeordnet ist, der strömungstechnisch einerseits mit der Saugseite des Motor-/Gebläseaggregats verbunden und andererseits mit Umgebungsdruck beaufschlagt ist. Dabei ist das Ventilgehäuse an wenigstens einem Gehäusesteil des Staubsaugers vorgesehen.

Die bekannten Ventilkörper dichten mit ihrer planen Oberfläche gegen eine Abdeckung, welche eine Einstromöffnung besitzt. Bei einem ansteigenden Unterdruck wird das Ventil geöffnet und der Ventilkörper entgegen der Kraftwirkung der Feder gedrückt. Durch diesen Öffnungsweg wird die Feder weiter vorgespannt und die erhöhte Federkraft schließt wieder das Unterdruckventil. Bei einem solch vorliegenden Betriebszustand können sich ein Öffnen und ein Schließen von dem Ventil in kürzeren Zeitabständen wiederholen. Das Ventil flattert zwischen der offenen und der geschlossenen Stellung hin und her. Ein solcher bistabiler Systemzustand (auch "flattern" genannt) von dem Unterdruckventil führt neben einer unzureichenden Kühlluftzufuhr auch zu unerwünschten Nebengeräuschen.

Aus der US 4,504, 081 A ist ein Rückschlagventil bekannt, bei dem ein Dichtelement einen Bodenabschnitt und einen im Wesentlichen ringförmigen Randabschnitt, welcher im Randbereich des Bodenabschnitts in Richtung auf die Schließposition des Rückschlagventils absteht. Ein ähnliches Dichtelement ist auch aus der US 5,058,623 bekannt.

Der Erfindung liegt die Aufgabe zugrunde, einen Staubsauger mit einem Unterdruckventil der eingangs näher beschrieben Art so weiterzubilden, dass insbesondere die bekannten Nachteile der bekannten Unterdruckventile beseitigt werden. Darüber hinaus soll bevorzugt ein Unterdruckventil bereitgestellt werden, bei dem der Ventilkörper sich schlagartig öffnet und die geöffnete Betriebsstellung beibehält, ohne bistabile Zustände anzunehmen.

Die Lösung der gestellten Aufgabe gelingt durch einen Staubsauger mit den Merkmale des Anspruchs 1. Vorteilhafte Aus- und Weiterbildungen, welche einzeln oder in Kombination miteinander eingesetzt werden können, sind Gegenstand der abhängigen Ansprüche.

Der erfindungsgemäße Staubsauger baut auf gattungsgemäßen Staubsaugern dadurch auf, dass der Ventilkörper an der Dichtfläche ein in Richtung auf die Schließposition abstehender, wenigstens abschnittsweise umlaufender Kragen ausgebildet ist.

Wird auf einen derart ausgebildeten Ventilkörper ein auf die Dichtfläche überwiegend senkrecht einwirkender Luftstrom zugeführt, so wird der Luftstrom beim erstmaligen Auftreffen auf die Dichtfläche in eine radial nach außen gerichtete Richtung von der Dichtfläche umgelenkt. Anschließend wird der Luftstrom an dem Kragen nochmals in eine andere Richtung umgelenkt. Durch diese zweite Umlenkung des Luftstroms erhält der Ventilkörper einen zusätzlichen Kraftimpuls in Richtung auf die Öffnungsposition, so dass das Unterdruckventil sich schlagartig öffnen kann. Der abstehende Kragen bildet gegenüber einer kragenlosen planen Fläche ein stark erhöhtes strömungstechnisches Hindernis für den Luftstrom. Der angebrachte Kragen wirkt dabei wie ein zusätzlicher Strömungswiderstand und hält dadurch den Ventilkörper zusätzlich sicher in der geöffneten Position. Mit dieser Luftführung nach der Art von einem Mäander wird schließlich auch eine bessere Dichtwirkung erreicht und es steht somit bei einem geschlossen Ventil die volle Saugleistung an dem Mundstück zur Verfügung.

Zur Erzielung der vorgenannten Vorteile haben sich Erstreckungen des Kragens zwischen etwa 1 bis 3 mm, vorzugsweise von etwa 2 mm, bewährt.

Erfindungsgemäß bevorzugt ist ein Kragen umlaufend geschlossenen ausgebildet, wodurch die Wirkung vorstehender Effekte maximal ausgeführt ist.

Je nach Zweckmäßigkeit kann der Kragen bündig mit der Außenkontur des Ventilkörpers abschließen oder sich innerhalb oder außerhalb der Außenkontur des Ventilkörpers über die Dichtfläche hinaus erstrecken.

In einer bevorzugten Ausgestaltung der Erfindung ist das Ventilgehäuse zumindest einteilig, vorzugsweise zweiteilig mit einem ersten Ventilgehäuseteil und einem zweiten Ventilgehäuseteil ausgebildet, wobei zur Montage des Ventilgehäuses durch Zusammenfügen eines ersten Gehäuseteils und eines zweiten Gehäuseteils des Staubsaugers das erste Ventilgehäuseteil am ersten Gehäuseteil und das zweite Ventilgehäuseteil am zweiten Gehäuseteil vorgesehen ist. Indem das Ventilgehäuse einteilig, vorzugsweise zweiteilig, ausgeführt ist und jedes der Ventilgehäuse an einem anderen Gehäuseteil des Staubsaugers vorgesehen ist, kann die Montage des Ventilgehäuses durch den Montageschritt des Zusammenfügens der Gehäuseteile des Staubsaugers erfolgen. Dabei entfällt ein gesonderter Montageschritt für das Zusammenfügen der Ventilgehäuseteile. Da bei der Montage des Staubsaugers zumindest ein Montageschritt erforderlich ist, um zwei Gehäuseteile des Staubsaugers zusammenzufügen, kann dieser Montageschritt gleichzeitig zur Montage der Ventilgehäuseteile genutzt werden. Vorzugsweise werden die beiden Ventilgehäuseteile an diejenigen Gehäuseteile des Staubsaugers angeordnet, die bereits Teile des Nebenluftkanals aufnehmen. D. h. eine Ansaugöffnung eines ersten Ventilgehäuseteils und eine Ausströmöffnung eines zweiten Ventilgehäuseteils können bereits fest mit dem Nebenluftkanal verbunden ausgebildet sein. So entfällt eine gesonderte Abdichtung zwischen Ventilgehäuse und Nebenluftkanal. Durch den Wegfall einer gesonderten Dichtung wird die Zuverlässigkeit für die Funktion des Unterdruckventils erhöht, da es zu weniger Ausfällen aufgrund von unerwünschten Leckströmungen kommen kann.

In einer vorteilhaften Ausgestaltung der Erfindung ist das erste Ventilgehäuseteil am ersten Gehäuseteil und/oder das zweite Ventilgehäuseteil am zweiten Gehäuseteil angeformt. Wenn die Gehäuseteile und die Ventilgehäuseteile als Kunststoffteile hergestellt sind, so kann jeweils ein Ventilgehäuseteil im Kunststoffspritzgussverfahren direkt an dem einen Gehäuseteil angeformt werden. Durch die direkte Anformung der Ventilgehäuseteile an die Gehäuseteile des Staubsaugers entfallen gesonderte Montageschritte zum Befestigen der Ventilgehäuseteile an den Gehäuseteilen des Staubsaugers und gesonderte Befestigungsmittel sind nicht mehr erforderlich. Durch die zusätzlich erreichte Reduzierung der Teilezahl ist auch insgesamt die Herstellung des Staubsaugers kostengünstiger möglich.

In einer bevorzugten Ausgestaltung der Erfindung ist das erste Ventilgehäuseteil an einem Gebläsekapselteil vorgesehen. Für eine besonders gute Geräuschisolierung des Motor-/Gebläseaggregats ist neben dem abgedichteten Einbau des Motor-/Gebläseaggregats in das Gehäuse des Staubsaugers ein zusätzliches zweites inneres Gehäuse vorgesehen, welches das Motor-/Gebläseaggregat zusätzlich umgibt, um durch Bildung einer zweiten schallisolierenden Wand eine zusätzliche Geräuschreduzierung zu erreichen. Ein solches zusätzliches Gehäuse, das das Motor-/Gebläseaggregat umgibt wird auch als Gebläsekapsel bezeichnet. Da der Nebenluftkanal mit einer Strömungsseite an den Innenraum der Gebläsekapsel angeschlossen sein muss, ist es von besonderem Vorteil wenn ein Ventilgehäuseteil bereits an einem Gebläsekapselteil angeformt ist. So wird eine direkte Verbindung des Unterdruckventils an den Nebenluftkanal erreicht.

In einer weiteren vorteilhaften Ausgestaltung der Erfindung ist das zweite Ventilgehäuseteil an einer Gehäuseraumkappe vorgesehen. Als Gebläseraumkappe wird dabei ein äußeres Gehäuseteil des Staubsaugers verstanden, welches die Gebläsekapsel des Motor-/Gebläseaggregats umgibt. Die Gebläseraumkappe kann dabei gleichzeitig auch die sichtbare Außenwand des Staubsaugers bilden. Zum Ansaugen von Frischluft über den Nebenluftkanal muss der Nebenluftkanal mit der Umgebung strömungstechnisch verbunden sein. D. h. zumindest an einem äußeren Gehäuseteil des Staubsaugers ist eine sogenannte Nebenluftöffnung erforderlich über die Nebenluft aus der Umgebung in den Nebenluftkanal angesaugt werden kann, wenn das Unterdruckventil geöffnet ist. Zur direkten Anbindung des zweiten Ventilgehäuseteils an die Ansaugöffnung des Nebenluftkanals ist es deshalb zur Vermeidung von Undichtigkeiten besonderes vorteilhaft wenn das zweite Ventilgehäuseteil an einer Gebläseraumkappe vorgesehen ist. Sind das zweite Ventilgehäuseteil und die Gebläseraumkappe aus Kunststoff hergestellt, so können diese beiden Teile auch in einfacher Weise im Kunststoffspritzgussverfahren herstellt werden, d. h. das zweite Ventilgehäuseteil ist an die Gebläseraumkappe direkt angeformt.

Wenn das Ventilgehäuse zumindest zweiteilig ausgebildet ist, so ist zwischen den zwei Ventilgehäuseteilen eine Abdichtung erforderlich. Das erste und das zweite Ventilgehäuseteil können in zusammengefügter Lage der Gehäuseteile des Staubsaugers mittels einer Labyrinthdichtung abgedichtet sein. Durch eine erfindungsgemäß vorgesehen Labyrinthdichtung ist ein gesondertes Dichtungsbauteil entbehrlich. Durch den Wegfall eines gesonderten Dichtungsbauteiles ist auch die Monatage vereinfacht, da keine zusätzliche Dichtung zwischen den Ventilgehäuseteilen eingelegt werden muss. Durch die Verwendung einer erfindungsgemäßen Labyrinthdichtung wird eine ausreichende Abdichtung zwischen den Ventilgehäuseteilen allein durch Zusammenfügen der Gehäuseteile des Staubsaugers erreicht.

Die Erfindung weiterbildend ist vorgesehen einen federvorgespannten Ventilkörper an einem der Ventilgehäuseteile vorzumontieren. Zum vormontierten Halten des federvorgespannten Ventilkörpers ist in dem Ventilgehäuseteil ein Rastmittel zwischen Ventilkörper und Ventilgehäuseteil vorgesehen. Zur Montage des Ventilkörpers wird zunächst ein Federelement in das Ventilgehäuseteil eingesetzt und der Ventilkörper aufgesteckt. Um zu verhindern, dass der federvorgespannte Ventilkörper durch die Federkraft wieder aus dem Ventilgehäuseteil herausbewegt wird, hintergreift das Rastmittel den Ventilkörper und hält diesen in einer federvorgespannten Lage in dem Ventilgehäuseteil fest. Durch das erfindungsgemäße Rastmittel können das Federelement und der Ventilkörper bereits in dem Gehäuseteil des Staubsaugers vormontiert sein. Bei der Fertigmontage des Staubsaugers ist dann nur noch das jeweilige Gehäuseteil des Staubsaugers zu montieren.

Das Rastmittel wird vorzugsweise von einer den Ventilkörper hintergreifenden Rastnase des Ventilgehäuseteils gebildet. Ist das Ventilgehäuseteil bzw. das Gehäuseteil des Staubsaugers aus Kunststoff hergestellt, so kann das Rastmittel, welches die Rastnase aufweist direkt an dem Ventilgehäuseteil bzw. dem Gehäuseteil des Staubsaugers angeformt sein.

Nachdem die Ventilgehäuseteile des Unterdruckventils zusammenmontiert sind, ist die Funktion des Rastmittels zum Zurückhalten des federgespannten Ventilkörpers nicht mehr erforderlich. Der federvorgespannte Ventilkörper kann dann allein durch das geschlossene Ventilgehäuse in seiner Position gehalten sein. So ist in einer Ausgestaltung der Erfindung vorgesehen, dass die Rastnase in zusammengefügter Lage der Gehäuseteile des Staubsaugers, bzw. der Ventilgehäuseteile von dem federvorgespannten Ventilkörper entlastet ist.

Zur Bildung eines zwischen Ventilkörper und Ventilgehäuseteil vorgesehenen Bypassquerschnitts kann erfindungsgemäß der federvorgespannte Ventilkörper einen kreisförmigen Querschnitt aufweisen und das Ventilgehäuseteil einen ovalen oder elliptischen Querschnitt aufweisen. Wenn der kreisförmige Ventilkörper in dem ovalen bzw. elliptischen Ventilgehäuseteil eingesetzt ist, so dichtet der Ventilkörper nicht vollständig den Querschnitt des Ventilgehäuses ab. Zwischen dem kreisförmigen Ventilkörper und dem ovalen bzw. elliptischen Ventilgehäuseteil verbleiben zwei sichelförmige Querschnitte, welche einen Bypass bilden. Prinzipiell ist es möglich einen derartigen Bypassquerschnitt durch jegliche Kombination zweier geeigneter unterschiedlicher Querschnitte von Ventilkörper und Ventilgehäuseteil zu realisieren. In jedem Fall ist sicherzustellen, dass die jeweiligen Querschnitte sich einerseits nicht vollständig decken andererseits zwischen Ventilkörper und Ventilgehäuseteil eine gewisse Anlage zur Führung des beweglichen Ventilkörpers im Ventilgehäuseteil sichergestellt ist. In einer alternativen Variante kann bspw. das Ventilgehäuseteil einen kreisförmigen Querschnitt aufweisen in dem ein ovaler oder elliptischer Ventilkörper eingesetzt ist.

Die vorliegende Erfindung sichert ein schlagartiges Öffnen des Unterdrucksventils eines Staubsaugers und vermeidet vorteilhaft bistabile Systemzustände (insb. sog "Flattern"), wie diese im Stand der Technik anzutreffen sind.

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
- Fig. 1: eine teilgeschnittene Seitenansicht eines Gebläsekapselteils mit angeformten ersten Ventilgehäuseteil;
- Fig. 2: eine Schnittansicht eine erfindungsgemäßen Gebläseraumkappe mit angeformten zweiten Ventilgehäuseteil;
- Fig. 3: eine Draufsicht auf das Gebläsekapselteil gemäß Figur 1;
- Fig. 4: eine Teilschnittansicht durch ein erfindungsgemäßes Unterdruckventil mit federvorgespannten verrastetem Ventilkörper in geschlossener Position;
- Fig. 5: eine Teilschnittansicht durch ein erfindungsgemäßes Unterdruckventil mit federvorgespannten verrastetem Ventilkörper in offenen Position; und
- Fig. 6: einen erfindungsgemäßen Ventilkörper sowie weitere mögliche Ausgestaltungen für einen Kragen an der Dichtfläche.

Bei der nachfolgenden Beschreibung der bevorzugten Ausführungsformen der vorliegenden Erfindung bezeichnen gleiche Bezugszeichen gleiche oder vergleichbare Komponenten.

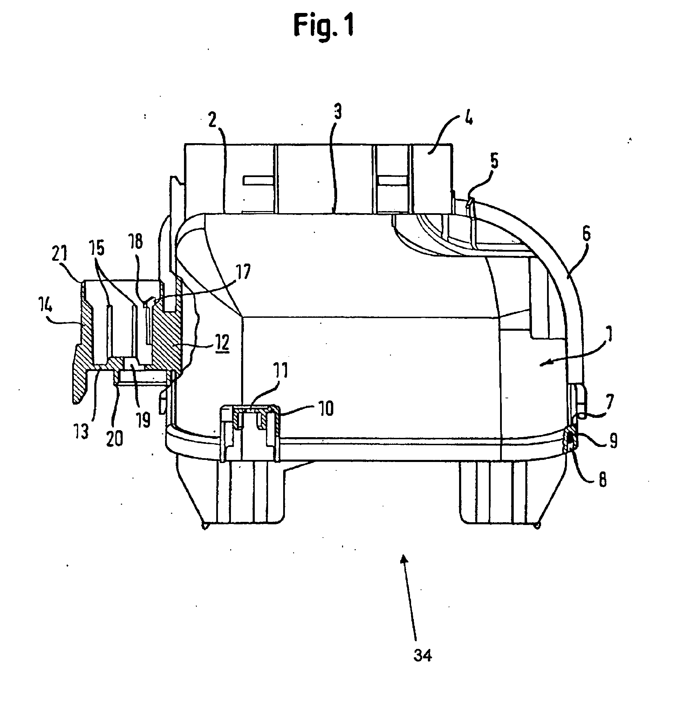

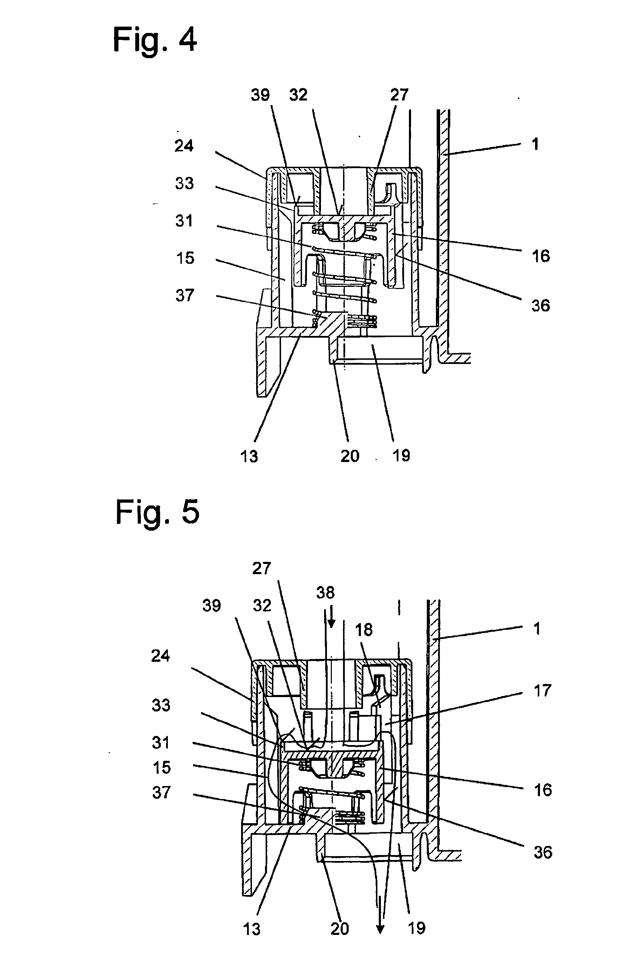

Fig. 1 zeigt eine teilgeschnittene Seitenansicht eines Gebläsekapselteils 1 mit angeformten ersten Ventilgehäuseteil 12. Das Gebläsekapselteil 1 ist haubenförmig ausgebildet. Das haubenförmige Gebläsekapselteil 1 weist eine Deckwand 2 auf, in die eine Ausblasöffnung 3 eingelassen ist. Die Ausblasöffnung 3 umschließt eine Aufnahme 4, die zur Aufnahme eines Ausblasfilters ausgebildet ist. Über einen an der Deckwand 2 des Gebläsekapselteils 1 angeformten Rasthacken 5 ist der nichtdargestellte Ausblasfilter in der Aufnahme 4 lösbar gehalten. Von der Deckwand 2 ausgehend erstrecken sich Seitenwände 6 des haubenförmigen Gebläseteils 1 nach unten. Die umlaufenden Seitenwände 6 weisen eine freie Kante 7 auf an die eine im Querschnitt U-förmige Rinne 8 vorgesehen ist. In die Rinne 8 ist optional ein Dichtmittel, insbesondere eine Dichtschnur 9 einsetzbar. Unter Weglassen der Dichtschnur 9 kann alternativ die Rinne 8 zusammen mit einer nichtdargestellten Kante eines Unterteils des Staubsaugers eine Labyrinthdichtung bilden. An die Seitenwand 6 bzw. die Rinne 8 sind Befestigungslaschen 10 angeformt. Durch die Öffnungen 11 sind Befestigungsmittel wie bspw. Schrauben einsetzbar wodurch das Gebläsekapselteil 1 mittels der Befestigungslaschen 10 an der nichtdargestellten Unterschale des Staubsaugers druckdicht befestigt werden kann. An einer Seitenwand 6 ist ein erstes Ventilgehäuseteil 12 angeformt. Das Ventilgehäuseteil 12 ist topfförmig ausgebildet. Das topfförmige Ventilgehäuseteil 12 weist einen Ventilboden 13 auf, an den sich senkrechte Topfwände 14 anschließen. Die Topfwand 14 weist eine im Querschnitt elliptische Grundform auf. An der Innenseite der Topfwand 14 sind Führungsrippen 15 für einen in Figur 4 näher dargestellten Ventilkörper 16. Des Weiteren ist an der Topfwand 14 ein Rastmittel 17 angeformt. Das Rastmittel 17 weist eine Rastnase 18 auf welche den Ventilkörper 16 in montierten Zustand übergreift. Am Ventilboden 13 ist des Weiteren eine abströmseitige Ausblasöffnung 19 vorgesehen. An einer Unterseite des Ventilbodens 13 ist eine bodenseitige Dichtungswand 20 angeformt. Die Dichtungswand 20 sitzt auf den Eingang eines nicht dargestellten Nebenluftkanals am Staubsaugergehäuse an. Der Dichtungswand 20 an einem gegenüberliegenden Ende des Ventilgehäuseteils 12 angeordnet ist an die Topfwand 14 eine Dichtungskante 21 angeformt. Die Dichtungskante 21 bringt im montierten Zustand des Gebläsekapselteils 1 mit einer Gebläseraumkappe 22 in einen Labyrinthkanal 23 eines zweiten Ventilgehäuseteils 24 ein.

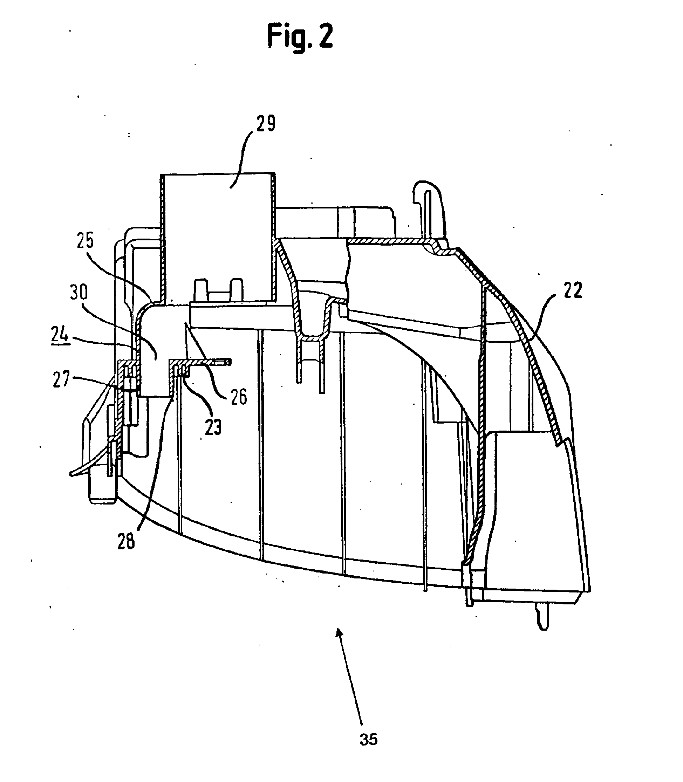

Das zweite Ventilgehäuseteil 24 ist in Fig. 2 näher dargestellt. Die in Fig. 2 dargestellte Gebläseraumkappe 22 ist wie das Gebläsekapselteil 1 haubenförmig ausgebildet. An einer Innenseite der Kappenwand 25 ist das zweite Ventilgehäuseteil 24 angeformt. Das zweite Ventilgehäuseteil weist eine Deckelwand 26 auf an die der nach unten gerichtete Labyrinthkanal 23 angeformt ist. Des Weiteren ist an der Deckelwand 26 koaxial zum Labyrinthkanal 23 ein Rohrstück 27 angeformt. Eine freie Kante 28 des Rohrstücks 27 sitzt im montierten Zustand des Unterdruckventils auf der Bodenfläche des Ventilkörpers 16 dichtend auf. Im montierten Zustand von Gebläsekapselteil 1 und Ventilgehäuseteil 12 drückt die freie Kante 28 des Rohrstücks 27 derart auf die Deckfläche des Ventilkörpers 16, dass der Ventilkörper 16 soweit nach unten gedrückt wird, dass die Rastnase 18 des Rastmittels 17 unbelastet ist. Ein Ansaugkanal 29 in der Gebläseraumkappe 22 ist mit Umgebungsluft verbunden. Über den Ansaugkanal 29 wird Frischluft bei geöffnetem Ventilkörper 16 über einen Eintritt 30 durch die Deckelwand 26 des zweiten Ventilgehäuseteils 24 angesaugt.

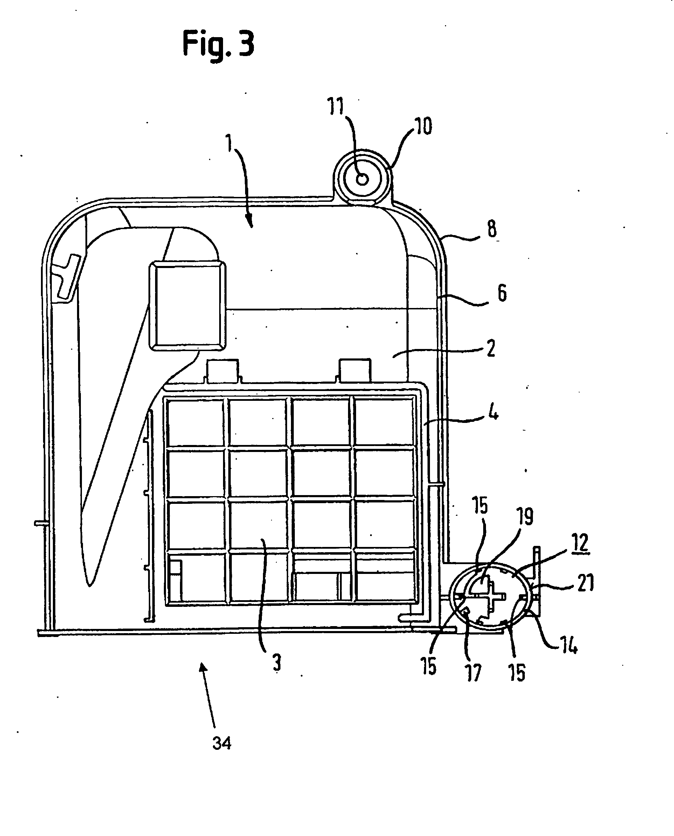

Die Fig. 3 zeigt das Gebläsekapselteil 1 aus Fig. 1 in der Draufsicht. In der dargestellten Ausführungsform weist die Topfwand 14 des Ventilgehäuseteils 12 eine ovale bzw. elliptische Form auf. Die Führungsrippen 15 sind in Nähe des kurzen Radius des elliptischen Querschnitts kleiner ausgebildet als in Nähe des großen Radius des elliptischen Querschnitts. Die unterschiedliche Größe der Führungsrippen 15 dient zur Aufnahme eines Ventilkörpers 16 mit kreisrundem Querschnitt.

Fig. 4 zeigt einen Teilausschnitt des Gebläsekapselteils 1 gemäß Fig. 1 mit einem Ventilkörper in geschlossener Position. Bündig mit der Außenkontur 36 des Ventilkörpers 16 steht von der Dichtfläche 32 ein Kragen 33 in Richtung auf die Schließposition ab. Am Ventilboden 13 des Ventilgehäuseteils 12 ist ein Sitz 37 vorgesehen, auf den ein gesondertes Federelement 31 aufsetzbar ist. Der Sitz 37 kann direkt an den Ventilboden 13 des Ventilgehäuseteils 12 angeformt sein. Es muss auch nicht notwendigerweise das Federelement 31 als gesondertes Bauteil wie beispielsweise eine metallische Federwendel ausgebildet sein, sondern das Federelement 31 kann bspw. auch direkt an den Ventilkörper 16 angeformt sein. Dabei ist das Federelement 31 wie der Ventilkörper 16 aus Kunststoff ausgebildet und das aus Kunststoff bestehende Federelement 31 an die Unterseite der Deckfläche des Ventilkörpers 16 angeformt. Nach Aufsetzen des gesonderten Federelements 31 auf den Sitz 37 oder nach direktem Einsetzen des Ventilkörpers 16 in das Ventilgehäuseteil 12 gleitet der Ventilkörper 16 entlang der Führungsrippen 15 der Topfwände 14 nach unten, bis die Rastnase 18 des Rastmittels 17 hinter dem Kragenbund 39 des Ventilkörpers 16 verrastet. In der in Fig. 4 dargestellten verrasteten Position des Ventilkörpers 16 ist verhindert, dass die mechanische Vorspannung des Federelements 31 den Ventilkörper 16 aus dem Ventilgehäuseteil 12 herausdrückt. In dieser vormontierten Lage des Ventilkörpers 16 kann der Ventilkörper 16 zusammen mit dem Gebläsekapselteil 1 montiert werden. Der Ventilkolben 16 dichtet mit seiner Dichtfläche 32 gegenüber einem Rohrstück 27 mit dessen Kante 28 ab. Das zweite Ventilgehäuse 24 ist in Fig. 4 und 5 als einzelnes Bauteil losgelöst von dem zweiten Gehäuseteil 35 dargestellt.

Fig. 5 zeigt einen Teilausschnitt des Gebläsekapselteils 1 gemäß Fig. 1 mit einem Ventilkörper 16 in offener Position. Der Ventilkörper befindet sich in der maximal geöffneten Stellung und berührt den Ventilboden 13. Der Luftstrom 38 wird durch den Eintritt 30 auf die Dichtfläche 32 zugeführt. Anschließend wird der Luftstrom 38 durch den Kragen 33 in eine andere Richtung weiter umgelenkt und tritt an der Ausblasöffnung 19 wieder aus.

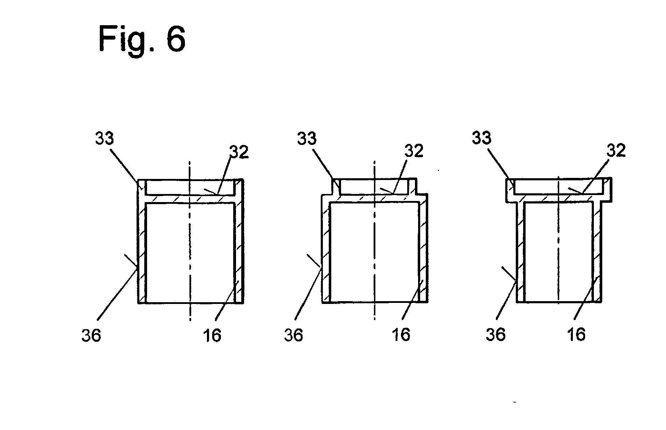

Fig. 6 schließlich zeigt den erfindungsgemäßen Ventilkörper 16 mit seiner Außenkontur 36 und der Dichtfläche 32 sowie mit einem abstehenden Kragen 33 der im ersten Bild bündig mit der Außenkontur 36, im zweiten Bild innerhalb der Außenkontur 36 und im dritten Bild außerhalb der Außenkontur 36 ausgebildet ist.

Die vorliegende Erfindung sichert ein schlagartiges Öffnen des Unterdrucksventils eines Staubsaugers und vermeidet vorteilhaft bistabile Systemzustände (insb. sog "Flattern"), wie diese im Stand der Technik anzutreffen sind.

### Bezugszeichenliste

- 1: Gebläsekapselteil
- 2: Deckwand
- 3: Ausblasöffnung
- 4: Aufnahme
- 5: Rasthacken
- 6: Seitenwände
- 7: Kante (freie Kante von Seitenwand)
- 8: Rinne (U-förmig)
- 9: Dichtschnur
- 10: Befestigungslaschen
- 11: Öffnungen
- 12: Ventilgehäuseteil (erstes)
- 13: Ventilboden
- 14: Topfwände
- 15: Führungsrippen
- 16: Ventilkörper
- 17: Rastmittel
- 18: Rastnase
- 19: Ausblasöffnung (abströmseitig)
- 20: Dichtungswand
- 21: Dichtungskante
- 22: Gebläseraumkappe
- 23: Labyrinthkanal
- 24: Ventilgehäuseteil (zweites)
- 25: Kappenwand
- 26: Deckelwand
- 27: Rohrstück
- 28: Kante (freie Kante von Rohrstück 27)
- 29: Ansaugkanal
- 30: Eintritt
- 31: Federelement
- 32: Dichtfläche (an Ventilkörper)
- 33: Kragen
- 34: erstes Gehäuseteil
- 35: zweites Gehäuseteil
- 36: Außenkontur
- 37: Sitz
- 38: Luftstrom
- 39: Kragenbund

## Patentansprüche

1. Staubsauger mit einem Gehäuse und einem Motor-/Gebläseaggregat, das saugseitig an einen Staubraum einer Staubsammelvorrichtung und druckseitig an eine Ausblasöffnung angeschlossen ist, sowie mit einem Unterdruckventil umfassend ein Ventilgehäuse (12, 24) und einen Ventilkörper (16), dessen Dichtfläche (32) durch ein Federelement (31) in einer Schließposition gehalten ist, in welcher der Ventilkörper (16) mit seiner Dichtfläche (32) gegenüber einem Rohrstück (27) mit dessen Kante (28) abdichtet, wobei der Ventilkörper (16) aus der Schließposition bei Erreichen eines vorgegebenen Unterdrucks in eine Offenposition umschaltend im Ventilgehäuse (12, 24) gelagert ist, das in einem Nebenluftkanal angeordnet ist, der strömungstechnisch einerseits mit der Saugseite des Motor-/Gebläseaggregats verbunden und andererseits mit Umgebungsdruck beaufschlagt ist, **dadurch gekennzeichnet, dass** an der Dichtfläche (32) ein in Richtung auf die Schließposition abstehender, wenigstens abschnittsweise umlaufender Kragen (33) ausgebildet ist.

2. Staubsauger nach Anspruch 1, **dadurch gekennzeichnet, dass** die Erstreckung des Kragens (33) etwa 1 bis 3 mm, vorzugsweise etwa 2 mm, beträgt.

3. Staubsauger nach Anspruch 1 oder 2, **dadurch gekennzeichnet, dass** der vorzugsweise umlaufend ausgebildete Kragen (33) bündig mit der Außenkontur (36) des Ventilkörpers (16) abschließt.

4. Staubsauger nach Anspruch 1 oder 2, **dadurch gekennzeichnet, dass** der vorzugsweise umlaufend ausgebildete Kragen (33) sich innerhalb oder außerhalb der Außenkontur (36) des Ventilkörpers (16) über die Dichtfläche (32) hinaus erstreckt.

5. Staubsauger nach einem der vorherigen Ansprüche, **dadurch gekennzeichnet, dass** das Ventilgehäuse zumindest einteilig, vorzugsweise zweiteilig mit einem ersten Ventilgehäuseteil (12) und einem zweiten Ventilgehäuseteil (24), ausgebildet ist.

6. Staubsauger nach einem der vorherigen Ansprüche, **dadurch gekennzeichnet, dass** zur Montage des Ventilgehäuses durch Zusammenfügen eines ersten Gehäuseteils (34) und eines zweiten Gehäuseteils (35) des Staubsaugers, das erste Ventilgehäuseteil (12) am ersten Gehäuseteil (34) und das zweite Ventilgehäuseteil (24) am zweiten Gehäuseteil (35) vorgesehen ist.

7. Staubsauger nach einem der vorherigen Ansprüche, **dadurch gekennzeichnet, dass** das erste Ventilgehäuseteil (12) am ersten Gehäuseteil (34) und/oder das zweite Ventilgehäuseteil (24) am zweiten Gehäuseteil (35) angeformt ist.

8. Staubsauger nach einem der vorherigen Ansprüche, **dadurch gekennzeichnet, dass** das erste Ventilgehäuseteil (12) an einem Gebläsekapselteil (1) vorgesehen ist.

9. Staubsauger nach einem der vorherigen Ansprüche, **dadurch gekennzeichnet, dass** das zweite Ventilgehäuseteil (24) an einer Gebläseraumkappe (22) vorgesehen ist.

10. Staubsauger nach einem der vorherigen Ansprüche, **dadurch gekennzeichnet, dass** das erste und das zweite Ventilgehäuseteil (12, 24) in zusammengefügter Lage der Gehäuseteile (34, 35) des Staubsaugers mittels einer Labyrinthdichtung abgedichtet sind.

11. Staubsauger nach einem der vorherigen Ansprüche, **dadurch gekennzeichnet, dass** an einem der Ventilgehäuseteile (12, 24) ein federvorgespannter Ventilkörper (16) vormontiert ist.

12. Staubsauger nach Anspruch 11, **dadurch gekennzeichnet, dass** zum vormontierten Halten des federvorgespannten Ventilskörper (16) in dem Ventilgehäuseteil (12) ein Rastmittel (17) zwischen Ventilkörper (16) und Ventilgehäuseteil (12) vorgesehen ist.

13. Staubsauger nach Anspruch 12, **dadurch gekennzeichnet, dass** das Rastmittel (17) von einer den Ventilkörper (16) hintergreifenden Rastnase (18) des Ventilgehäuseteils (12) gebildet wird.

14. Staubsauger nach Anspruch 13, **dadurch gekennzeichnet, dass** die Rastnase (18) in zusammengefügter Lage der Gehäuseteile (35, 36) des Staubsaugers von dem federvorgespannten Ventilkörper (16) entlastet ist.

15. Staubsauger nach einem der Ansprüche 11 bis 14, **dadurch gekennzeichnet, dass** zur Bildung eines zwischen Ventilkörper (16) und Ventilgehäuseteil (12) vorgesehenen Bypass-Querschnitts der federvorgespannte Ventilkörper (16) einen kreisförmigen Querschnitt und das Ventilgehäuseteil (12) einen kreisförmigen, ovalen oder elliptischen Querschnitt aufweist.

## Claims

1. Vacuum cleaner having a housing and a motor/fan unit, which on the suction side is connected to a dust compartment of a dust collection device and on the pressure side is connected to an outlet opening, and having a vacuum valve comprising a valve housing (12, 24) and a valve body (16), the sealing surface (32) of which is held by a spring element (31) in a closed position, in which the sealing surface (32) of the valve body (16) creates a seal with the edge (28) of a pipe section (27), wherein the valve body (16) is mounted in the valve housing (12, 24) in a switchable manner from the closed position to an open position when a predetermined vacuum is reached, said valve housing (12, 24) being disposed in a secondary air channel which is flow-connected on one side to the suction side of the motor/fan unit and on the other side is exposed to ambient pressure, **characterised in that** a peripheral collar (33) is formed at the sealing surface (32) at least in areas, said collar protruding in the direction towards the closed position.

2. Vacuum cleaner according to claim 1, **characterised in that** the extension of the collar (33) is approximately 1 to 3 mm, preferably approximately 2 mm.

3. Vacuum cleaner according to claim 1 or 2, **characterised in that** the preferably peripherally formed collar (33) sits flush with the outer contour (36) of the valve body (16).

4. Vacuum cleaner according to claim 1 or 2, **characterised in that** the preferably peripherally formed collar (33) extends out over the sealing surface (32) inside or outside the outer contour (36) of the valve body (16).

5. Vacuum cleaner according to one of the preceding claims, **characterised in that** the valve housing is formed at least as one part, preferably as two parts with a first valve housing part (12) and a second valve housing part (24).

6. Vacuum cleaner according to one of the preceding claims, **characterised in that** for mounting the valve housing by assembling a first housing part (34) and a second housing part (35) of the vacuum cleaner, the first valve housing part (12) is provided on the first housing part (34) and the second valve housing part (24) on the second housing part (35).

7. Vacuum cleaner according to one of the preceding claims, **characterised in that** the first valve housing part (12) is integrally moulded on the first housing part (34) and/or the second valve housing part (24) is integrally moulded on the second housing part (35).

8. Vacuum cleaner according to one of the preceding claims, **characterised in that** the first valve housing part (12) is provided on a fan casing part (1).

9. Vacuum cleaner according to one of the preceding claims, **characterised in that** the second valve housing part (24) is provided on a fan compartment cap (22).

10. Vacuum cleaner according to one of the preceding claims, **characterised in that** the first and the second valve housing part (12, 24) are, in the assembled state of the housing parts (34, 35) of the vacuum cleaner, sealed by means of a labyrinth seal.

11. Vacuum cleaner according to one of the preceding claims, **characterised in that** a spring-biased valve body (16) is premounted on one of the valve housing parts (12, 24).

12. Vacuum cleaner according to claim 11, **characterised in that**, in the premounted state, a latching means (17) is provided between valve body (16) and valve housing part (12) to hold the spring-biased valve body (16) in the valve housing part (12).

13. Vacuum cleaner according to claim 12, **characterised in that** the latching means (17) is formed by a latching lug (18) of the valve housing part (12) which engages behind the valve body (16).

14. Vacuum cleaner according to claim 13, **characterised in that** the latching lug (18) is, in the assembled state of the housing parts (35, 36) of the vacuum cleaner, released from the spring-biased valve body (16).

15. Vacuum cleaner according to one of claims 11 to 14, **characterised in that** to form a bypass cross-section provided between valve body (16) and valve housing part (12) the spring-biased valve body (16) has a circular cross-section and the valve housing part (12) has a circular, oval or elliptical cross-section.

## Revendications

1. Aspirateur comprenant un boîtier et une unité moteur/ventilateur, qui est raccordée côté aspiration à un espace à poussière d'un dispositif collecteur de poussière et côté pression à une ouverture de sortie, ainsi qu'une soupape de dépression comprenant un carter de soupape (12, 14) et un corps de soupape (16) dont la surface d'étanchéité (32) est maintenue dans une position de fermeture par un élément à ressort (31), dans laquelle position de fermeture le corps de soupape (16) étanchéifie avec sa surface d'étanchéité (32) par rapport à une pièce tubulaire (27) à l'aide du bord (28) de celle-ci, le corps de soupape (16) étant logé dans le carter de soupape (12, 24) en commutant de la position de fermeture, lorsqu'une dépression prédéfinie est atteinte, en une position d'ouverture, lequel carter de soupape est disposé dans un canal d'air secondaire qui, du point de vue flux, est relié d'une part au côté aspiration de l'unité moteur/ventilateur et d'autre part est alimenté avec la pression ambiante, **caractérisé en ce qu'**un collet (33) périphérique au moins en partie, en saillie en direction de la position de fermeture, est réalisé sur la surface d'étanchéité (32).

2. Aspirateur selon la revendication 1, **caractérisé en ce que** l'étendue du collet (33) est d'environ 1 à 3 mm, de préférence d'environ 2 mm.

3. Aspirateur selon la revendication 1 ou 2, **caractérisé en ce que** le collet (33) réalisé de préférence de manière périphérique se termine au même niveau que le contour extérieur (36) du corps de soupape (16).

4. Aspirateur selon la revendication 1 ou 2, **caractérisé en ce que** le collet (33) réalisé de préférence de manière périphérique s'étend au-delà de la surface d'étanchéité (32) à l'intérieur ou à l'extérieur du contour extérieur (36) du corps de soupape (16).

5. Aspirateur selon l'une quelconque des revendications précédentes, **caractérisé en ce que** le carter de soupape est réalisé au moins d'une seule pièce, de préférence en deux pièces avec une première partie de carter de soupape (12) et une deuxième partie de carter de soupape (24).

6. Aspirateur selon l'une quelconque des revendications précédentes, **caractérisé en ce que** pour le montage du carter de soupape par assemblage d'une première partie de boîtier (34) et d'une deuxième partie de boîtier (35) de l'aspirateur, la première partie de carter de soupape (12) est ménagée sur la première partie de boîtier (34) et la deuxième partie de carter de soupape (24) est ménagée sur la deuxième partie de boîtier (35).

7. Aspirateur selon l'une quelconque des revendications précédentes, **caractérisé en ce que** la première partie de carter de soupape (12) est formée sur la première partie de boîtier (34) et/ou **en ce que** la deuxième partie de carter de soupape (24) est formée sur la deuxième partie de boîtier (35).

8. Aspirateur selon l'une quelconque des revendications précédentes, **caractérisé en ce que** la première partie de carter de soupape (12) est ménagée sur une partie de capsule de ventilateur (35).

9. Aspirateur selon l'une quelconque des revendications précédentes, **caractérisé en ce que** la deuxième partie de carter de soupape (24) est ménagée sur un capuchon de la chambre de ventilateur (22).

10. Aspirateur selon l'une quelconque des revendications précédentes, **caractérisé en ce que** la première et la deuxième parties de carter de soupape (12, 24), en position assemblée des parties de boîtiers (34, 35) de l'aspirateur, sont rendues étanches au moyen d'un joint à labyrinthe.

11. Aspirateur selon l'une quelconque des revendications précédentes, **caractérisé en ce qu'**un corps de soupape (16) précontraint par ressort est prémonté dans l'une des parties de carter de soupape (12, 24).

12. Aspirateur selon la revendication 11, **caractérisé en ce que** pour maintenir le corps de soupape (16) précontraint par ressort de manière prémontée dans la partie de carter de soupape (12), un moyen d'encliquetage (17) est ménagé entre le corps de soupape (16) et une partie de carter de soupape (12).

13. Aspirateur selon la revendication 12, **caractérisé en ce que** le moyen d'encliquetage (17) est formé par un ergot (18) de la partie de carter de soupape (12) ayant prise par l'arrière dans le corps de soupape (16).

14. Aspirateur selon la revendication 13, **caractérisé en ce que** l'ergot (18), en position assemblé des parties de boîtier (35, 36) de l'aspirateur, est déchargé par le corps de soupape (16) précontraint par ressort.

15. Aspirateur selon l'une quelconque des revendications 11 à 14, **caractérisé en ce que** pour former une section transversale de bypass, ménagée entre le corps de soupape (16) et la partie de carter de soupape (12), le corps de soupape (16) précontraint par ressort présente une section transversale circulaire et la partie de carter de soupape (12) présente une section transversale circulaire, ovale ou elliptique.
